# EUROPEAN PATENT APPLICATION

(11) **EP 4 832 062 A1**
(43) Date of publication of application: **28.10.2026**
(21) Application number: 26173395.0
(22) Date of filing: 20.04.2026
(51) Int. Cl.: H01M 4/04, H01M 4/62

(54) **CATHODE SLURRY COMPOSITION AND CATHODES MADE THEREFROM FOR BATTERIES**

(30) Priority: 21.04.2025 US 202563791753 P
(71) Applicant: Kraton Polymers Nederland B.V., 1322 CE Almere (NL)
(72) Inventor: YANG, Huixian, 1031 HL Amsterdam (NL); NIU, Yaming, 1031 HL Amsterdam (NL); BENING, Robert, 1031 HL Amsterdam (NL); FENG, Yuhui, 1031 HL Amsterdam (NL); MA, Li, 1031 HL Amsterdam (NL)
(74) Representative: Henkel & Partner mbB

(57) **Abstract**

A cathode for a rechargeable battery and a slurry composition for forming the cathode are provided. The cathode comprises a cathode layer disposed on a current collector, the cathode layer comprising an active material, a conductive material, and a binder composition comprising polyvinylidene fluoride and a hydrogenated styrenic block copolymer component. The hydrogenated styrenic block copolymer comprises a block copolymer having vinyl aromatic blocks and a diene-derived block comprising vinyl aromatic units distributed therein. The cathode can exhibit improved peel adhesion to the current collector, including peel adhesion strength of at least 0.5 N per 25 mm, while maintaining electrochemical performance. The slurry composition can exhibit shear-thinning rheological properties suitable for coating at elevated solids content.

## Description

### FIELD

The disclosure relates to a cathode in rechargeable batteries, and more particularly to the use of hydrogenated styrenic block copolymers as binder in cathode layers and slurry compositions for batteries.

### BACKGROUND

Rechargeable batteries are used to power a wide range of applications including mobile phones, laptop and tablet computers, power tools, energy storage systems, and electric vehicles. Examples of rechargeable batteries include lithium-ion batteries, sodium-ion batteries, and other alkali-ion battery systems. A typical battery includes a cathode (positive electrode), an anode (negative electrode), a separator, and an electrolyte. Cathodes are formed by coating a slurry comprising an active material, a binder, and a conductive material onto a current collector, followed by drying and optional compression.

Polyvinylidene fluoride (PVDF) is commonly used as a binder in cathodes due to its chemical stability and compatibility with a variety of cathode active materials. However, PVDF alone can exhibit insufficient adhesion to metal current collectors, such as aluminum, resulting in delamination, cracking, or loss of electrical contact during operation. PVDF-based slurries can also exhibit suboptimal rheological properties, including poor dispersion of solid components, sedimentation of active materials, and insufficient shear-thinning behavior, leading to coating defects and processing challenges, particularly at high solids loadings.

Accordingly, there remains a need for improved binder compositions that provide enhanced adhesion and slurry processability.

### SUMMARY

In an aspect, a cathode for a battery is disclosed. The cathode comprises a current collector and a cathode layer disposed on the current collector. The cathode layer comprises an active material, a conductive material, and a binder composition. The binder composition comprises, consists essentially of, or consists of PVDF and a hydrogenated styrenic block copolymer (HSBC) component comprising a first HSBC having at least one formula selected from: A-M-A, (A-M-A)nX, (A-M)nX, and mixtures thereof, wherein n is an integer of 2 to 7, X is residue of a coupling agent, each A block is composed of vinyl aromatic units, and each M block is composed of at least one conjugated diene unit and at least one vinyl aromatic unit. The M block has an Aromatic Blockiness Index of 3-40%, as determined by HSQC NMR spectroscopy. The first HSBC has a peak molecular weight (Mp) of 80-150 kg/mol, and a polystyrene content of 20-70 wt.%. The PVDF to HSBC component is present at a weight ratio of 4:6 to 15: 1. The cathode layer exhibits a peel adhesion strength to the current collector of greater than 0.5 N/25 mm, measured according to ASTM D903, wherein the peel test is performed at a peel rate of 200 mm/min.

In an aspect, a cathode slurry is disclosed. The cathode slurry comprises an active material, a conductive material, and a binder composition. The binder composition comprises, consists essentially of, or consists of PVDF and a HSBC component comprising a first HSBC having at least one formula selected from: A-M-A, (A-M-A)nX, (A-M)nX, and mixtures thereof, wherein n is an integer of 2 to 7, X is residue of a coupling agent, each A block is composed of vinyl aromatic units, and each M block is composed of at least one conjugated diene unit and at least one vinyl aromatic unit. The M block has an Aromatic Blockiness Index of 3-40%, as determined by HSQC NMR spectroscopy. The first HSBC has a peak molecular weight (Mp) of 80-150 kg/mol, and a polystyrene content of 20-70 wt.%. The PVDF to HSBC component is present at a weight ratio of 4:6 to 15:1. The slurry has at least one of a viscosity of 2,000-15,000 cP at a shear rate of 40 s⁻¹ at 21-25°C, measured according to ASTM D2196, a solids content of 30-75 wt.%, and a fineness of grind of no greater than 10 µm.

In an aspect, the cathodes are used in lithium-ion batteries, sodium-ion batteries, and other rechargeable battery systems.

### DESCRIPTION

The following terms will be used throughout the specification:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, or C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Polystyrene content" or "PSC" of a block copolymer refers to the weight % of vinyl aromatic, e.g., styrene in the block copolymer, calculated by dividing the sum of molecular weight of all vinyl aromatic units by the total molecular weight of the block copolymer. PSC can be determined using any suitable methodology such as proton nuclear magnetic resonance (¹HNMR).

"Butylene unit content" refers to the content, in weight %, of the butylene units ("B") relative to all diene-based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by ¹H NMR and ¹³C NMR.

"Molecular weight" or M_{w} refers to the polystyrene equivalent molecular weight in g/mol of a polymer block or a block copolymer. M_{w} can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. M_{w} of polymers measured using GPC so calibrated are polystyrene equivalent molecular weights or apparent molecular weights. M_{w} expressed herein is measured at the peak of the GPC trace and are commonly referred to as polystyrene equivalent "peak molecular weight," designated as Mₚ.

"Hydrogenated styrenic block copolymer" or "HSBC" refers to a styrenic block copolymer that is partially or fully hydrogenated. HSBC is based on blocks of conjugated diene and styrenic monomers in which a fraction of the double bonds resulting from the conjugated diene units have been reduced or hydrogenated. The HSBC is hydrogenated to a hydrogenation level of > 80%, or > 90%, or > 95%, or > 99%. In embodiments, the aromatic bonds have been reduced or hydrogenated to a hydrogenation level of 0 to 15%.

"Hydrogenated styrenic block copolymer component" or "HSBC component" refers to one or more hydrogenated styrenic block copolymers present in the binder, including a first HSBC and, optionally, a second HSBC.

"Hydrogenation level" (H2%) refers to the level of saturation of the olefinic double bonds into the block copolymer, which can be determined using proton nuclear magnetic resonance (¹H NMR) spectroscopy, carbon-13 nuclear magnetic resonance (¹³C NMR) spectroscopy, and/or ozonolysis titration.

"Residual Unsaturation (RU)" refers to the levels of unsaturation, i.e., carbon-carbon double bonds per gram of block copolymer. RU can be measured using nuclear magnetic resonance (¹HNMR) or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

Glass transition temperature (Tg) is measured by Dynamic Mechanical Analysis (DMA) according to ASTM 4065.

"Binder composition" refers to a polymeric binder system comprising PVDF and the HSBC component. The binder composition is present in the cathode slurry and, after drying, in the cathode layer.

"Film" may be used interchangeably with layer, or film layer.

"Electrolyte uptake" refers to the increase in mass of a polymer-containing film or layer after immersion in an electrolyte, expressed as a percentage relative to the initial dry weight. Electrolyte uptake is determined by measuring the weight of the film or layer before and after immersion in electrolyte and is indicative of solvent absorption, polymer-electrolyte compatibility, and dimensional stability in electrochemical environments.

"Thickness increase ratio" refers to the percentage increase in film thickness relative to the initial thickness of the dry film prior to electrolyte exposure. The thickness of the film may be measured using a micrometer or profilometer before and after immersion. The electrolyte may be, for example, 1.0 M LiPF₆ in a 1:1:1 volume mixture of ethylene carbonate (EC), diethyl carbonate (DEC), and dimethyl carbonate (DMC).

The disclosure relates to cathodes and slurry compositions for rechargeable batteries. The cathode comprises a cathode layer disposed on a current collector, wherein the cathode layer is formed from a cathode slurry composition comprising a binder, an active material, a conductive material, and a solvent. The binder comprises, consists essentially of, or consists of a hydrogenated styrenic block copolymer component and polyvinylidene fluoride ("PVDF").

Binder Composition: The binder composition is used in the cathode slurry composition and in the cathode layer formed therefrom, in an amount of < 10 wt.%, or < 5 wt.%, or 1-10 wt.%, or 1-8 wt.%, or 1-6 wt.%, or 1-5 wt.%, based on the total weight of the cathode slurry composition. In embodiments, the PVDF and hydrogenated styrenic block copolymer component ("HSBC component") are present in the binder in a weight ratio of PVDF to HSBC component in a range of 4:6 to 15:1, or 4:6 to 12:1, 4:6 to 10:1, or 4:6 to 9:1, 5:5 to 9:1, or 6:4 to 9:1, or 6.5:3.5 to 9:1, or 7:3 to 9:1, 8:1 to 12:1.

In embodiments, the HSBC component consists of a single HSBC ("first HSBC"). In other embodiments, the HSBC component further comprises one or more HSBC ("second HSBC") that is different from the first HSBC. In embodiments, the HSBC component comprises two HSBC at a weight ratio of first HSBC to second HSBC in a range of 1:1 to 3:1, or 1.2:1 to 2.5:1, or 1.5:1 to 2:1. In embodiments, the combined amount of the first and second HSBC corresponds to the total HSBC component in the binder.

First Hydrogenated Styrenic Block Copolymer (HSBC): The first HSBC comprises a block copolymer having a structure selected from A-M-A, (A-M-A)ₙX, (A-M)ₙX, and mixtures thereof, wherein n is an integer of 2 to 7 and X is a residue of a coupling agent. The first HSBC is formed by hydrogenation of a styrenic block copolymer (SBC) precursor, which may be linear, branched, or radial. The first HSBC can be partially or fully hydrogenated.

Each A block is composed of vinyl aromatic units. Each M block comprises at least one conjugated diene unit and at least one vinyl aromatic unit.

In embodiments, the M blocks have an Aromatic Blockiness Index or "ABI" of 3-40%, or 3-35%, as the percentage of vinyl aromatic units having vinyl aromatic units as nearest neighbors on both sides along the polymer chain, relative to the total aromatic units present in the M block. ABI can be determined using Heteronuclear Single Quantum Coherence (HSQC) NMR spectroscopy. The following non-limiting examples illustrate determination of ABI within representative M blocks or M block within an HSBC structure, where "S" represents a vinyl aromatic unit and "bd" represents a conjugated diene-derived unit. Qualifying vinyl aromatic units having vinyl aromatic neighbors on both sides are indicated in lowercase ("s"), while vinyl aromatic units are otherwise denoted as "S".

Example 1 (M block): bd-bd-S-s-S-bd-S-s-S-bd-S-s-S-bd-bd. Total vinyl aromatic units of 9; qualifying units of 3, for ABI = 3/9.

Example 2 (M block): bd-bd-S-s-S-bd-S-bd-S-s-S-bd-bd. Total vinyl aromatic units of 7; qualifying units of 2, for ABI = 2/7.

Example 3 (M block): bd-bd-S-s-s-s-s-S-bd-S-bd-S-s-S-bd-bd. Total vinyl aromatic units of 10; qualifying units of 5, for ABI = 5/10.

Example 4 (M block): bd-bd-S-S-bd-S-s-S-bd-S-s-S-bd-bd. Total vinyl aromatic units of 8; qualifying units of 2, for ABI = 2/8.

Example 5 (HSBC (A-M)nX structure): (S-S-S-S-S-S-S - bd-bd-S-s-S-bd-S-s-S-bd-S-s-S-bd-bd)nX. Only the M block is considered. Total vinyl aromatic units in block M of 9; qualifying units of 3, for ABI = 3/9.

Example 6 (HSBC having A-M-A structure): S-S-S-S-S-S-S - bd-bd-S-s-S-bd-S-s-S-bd-S-s-S-bd-bd - S-S-S-S-S-S. Only the M block is considered. Total vinyl aromatic units in block M of 9; qualifying units of 3, for ABI = 3/9.

In embodiments, the M block corresponds to a copolymer block of E/B/S or EP/S type. In such embodiments, E/B/S blocks are copolymer blocks composed of ethylene units, butylene units, and vinyl aromatic units, and EP/S blocks are copolymer blocks composed of ethylene-propylene units and vinyl aromatic units. Vinyl aromatic monomers can be incorporated into the M block by copolymerization with conjugated diene monomers such as 1,3-butadiene or isoprene, in any order or distribution to form the structures described herein. In embodiments, the E/B/S and EP/S copolymers blocks exhibit a distribution consistent with the M block distribution described above.

The first HSBC has a configuration selected from: S-E/B/S-S, S-EP/S-S, (S-E/B/S-S)ₙX, (S-E/B/S)ₙX, (S-EP/S-S)ₙX and (S-EP/S)ₙX, and mixtures thereof, with n = an integer of 2 to 7 and X is a residue of a coupling agent. These configurations correspond to AM-A, (A-M-A)nX, and (A-M)nX structures, respectively. The first HSBC can be partially or fully hydrogenated.

Each S block is composed of vinyl aromatic units. E/B/S is composed of ethylene ("E") units / butylene ("B") units / vinyl aromatic ("S") units. Each EP/S is composed of ethylene-propylene ("EP") units / vinyl aromatic ("S") units. In embodiments, vinyl aromatic monomer can be introduced or copolymerized with 1,3-butadiene monomer and/or isoprene monomer by any order and in any distribution to form any of configurations as described. In embodiments, the E/B/S and EP/S copolymers are copolymers having a non-uniform monomer distribution. In embodiments, the M blocks (such as E/B/S and EP/S copolymer blocks), have an ABI of 3-40%, or 3-35% as determined by HSQC NMR spectroscopy as the percentage of vinyl aromatic units that have vinyl aromatic units as nearest neighbors on both sides along the polymer chain, relative to the total aromatic units present in the M block.

In embodiments, the vinyl aromatic monomer is selected from the group consisting of styrene, alpha-methylstyrene, para-methylstyrene, para-ethylstyrene, para-n-propylstyrene, para-iso-propylstyrene, para-n-butylstyrene, para-sec-butylstyrene, para-isobutylstyrene, para-t-butylstyrene, isomers of para-decylstyrene, isomers of para-dodecylstyrene, ortho-substituted styrene, meta-substituted styrene, 1,1-diphenylethylene, dimethyl styrene, halogenated styrene, methoxy styrene, acetoxy styrene, vinyl toluene, isomers of vinyl toluene, vinyl xylene, 4-vinylbiphenyl, vinyl naphthalene, vinyl anthracene, and mixtures thereof. In embodiments, the vinyl aromatic monomer is styrene. As used herein, "vinyl aromatic units" refer to polymerized units derived from the vinyl aromatic monomers, including such units when incorporated into block copolymer segments.

In embodiments, the first HSBC has a PSC of > 20 wt.%, or < 60 wt. %, or < 50 wt.%, or 20-70 wt.%, or 20-55 wt.%, or 25-50 wt.%, or 30-45 wt.%.

In embodiments, the first HSBC has a butylene unit content of > 20 wt.%, or > 25 wt.%, or > 30 wt.%, or > 35 wt.%, or < 80 wt.%, or 20-80 wt.%, or 25-80 wt.%, or 30-80 wt.%.

In embodiments, the first HSBC has a M block polystyrene content of 20-65 wt.%, or 35-65 wt.%, or 40-65 wt.%, or 40-60 wt.%, based on the total weight of the M block (E/B/S and EP/S).

In embodiments, the first HSBC has a peak molecular weight (Mₚ) of 80-150 kg/mol, or 90-140 kg/mol, or 100-130 kg/mol.

In embodiments, the first HSBC has a diblock content of < 15 wt.%, or < 10 wt.%, or < 7 wt.%, or 1-15 wt.%, or 1-10 wt.%, or 1-7 wt.%, based on total weight of the first HSBC.

In embodiments, the first HSBC has a structure of S-E/B/S-S, (S-E/B/S-S)ₙX, or (S-E/B/S)ₙX with the E/B/S block having an E to B mole ratio of 10:90 to 65:35, or 20:80 to 60:40, or 25:75 to 55:45, which can be determined by ¹H NMR. In embodiments, copolymer EP/S has E to P mole ratio of 1:1.

In embodiments, the first HSBC has a S unit to E/B/S unit and / or a S unit to EP/S unit weight ratio of 20:80 to 55:45, or 25:75 to 50:50, or 30:70 to 45:55, based on the total weight of the first HSBC.

In embodiments, the first HSBC has a structure of S-E/B/S-S, (S-E/B/S-S)ₙX, or (S-E/B/S)ₙX with the block S constituting from 10 - 25, or 12 - 22, or 14 - 20, or 16 - 18 wt.%, and the block E/B/S constituting from 50-80, or 55-75 wt.%, based on total weight of the first HSBC. In embodiments, the first HSBC has a structure of S-EP/S-S, (S-EP/S-S)ₙX and (S-EP/S)ₙX with the block S constituting from 10 - 25, or 12 - 22, or 14 - 20, or 16 - 18 wt.%, and the block EP/S constituting from 50-80, or 55-75 wt.%, based on total weight of the first HSBC.

In embodiments, the first HSBC has a structure of S-E/B/S-S, (S-E/B/S-S)ₙX, or (S-E/B/S)ₙX with the block E/B/S containing 1,3-butadiene monomer incorporated by 1,2-addition in an amount of 15 - 50, or 18 - 45, or 20 - 40 wt.%, based on total weight of the polymerized 1,3-butadiene monomer in the block E/B/S, with the remainder being 1,4-addition.

In embodiments, the first HSBC has a structure of S-EP/S-S, (S-EP/S-S)ₙX or (S-EP/S)ₙX, with the block EP comprising > 55, or > 65, or > 70, or > 80, or > 90, or < 100 wt.% of polymerized isoprene monomers incorporated by 1,4-addition and hydrogenated, based on total polymerized isoprene monomers in the block EP, remainder being 3,4-addition.

The block S derived from the polymerized vinyl aromatic monomer units can be essentially left unhydrogenated. In embodiments, the block S has a hydrogenation level of < 30, or < 20, or < 10, or < 5%, based on total double bonds present in the block S. In embodiments, the polybutadiene block is hydrogenated to a hydrogenation level of > 80, or > 85, or > 90, or > 95, or > 98, or > 99 or up to 100%, based on total double bonds present in the polybutadiene block. In embodiments, the polyisoprene block is hydrogenated to a hydrogenation level of > 80, or > 85, or > 90, or > 95, or > 98, or > 99 or up to 100%, based on total double bonds present in the polyisoprene block.

In embodiments, the first HSBC has a residual unsaturation or RU of 0-20 meq/g, or 0-15 meq/g, or 0-10 meq/g. In embodiments, when the first HSBC is partially hydrogenated, the hydrogenated polybutadiene block has a residual unsaturation or RU of < 20 meq/g, or < 15 meq/g, or < 10 meq/g, or < 8 meq/g, or > 3 meq/g, or > 5 meq/g, or 3-20 meq/g, or 3-15 meq/g, or 3-10 meq/g. In embodiments, when the first HSBC is fully hydrogenated, the hydrogenated polybutadiene block has a residual unsaturation or RU of 0-3 meq/g, or 0-2 meq/g, or 0-1 meq/g, or 0-0.5 meq/g, 0.05-0.5 meq/g, or < 0.5 meq/g, or < 0.4 meq/g, or < 0.3 meq/g, or < 0.2 meq/g, or < 0.1 meq/g, based on total double bonds present in the polybutadiene block.

In embodiments, each block S has a peak molecular weight of 4-45 kg/mol, 5-40 kg/mol, or 7-35 kg/mol, or 9-30 kg/mol, or at least 9.0 kg/mol, or at least 6 kg/mol, or at least 4.0 kg/mol. In embodiments, the block E/B/S has a peak molecular weight of 26-105 kg/mol, or 30-95 kg/mol, or 45-75 kg/mol, or 55-65 kg/mol. In embodiments, the peak molecular weight of the E/B/S block is determined as the subtraction of the S block peak molecular weight from the S-E/B/S peak molecular weight.

In embodiments, the first HSBC having a configuration of (S-E/B/S)ₙX, (S-E/B/S-S)ₙX or (S-E/P/S)ₙX has a coupling efficiency of > 50%, or > 60%, or > 70%, or > 80%, or > 90%.

In embodiments, the first HSBC has a tensile strength of > 10 MPa, or > 15 MPa, or < 50 MPa, or < 40 MPa, or 10-50 MPa, or 10-40 MPa, or 15-35 MPa, according to ASTM D638.

In embodiments, the first HSBC exhibits electrochemical stability suitable for use in lithium-ion battery cathodes. For example, linear sweep voltammetry (LSV) measurements indicate that the first HSBC may be electrochemically stable up to at least about 4.5 V versus Li/Li⁺, as evidenced by the absence of significant oxidative current. Such electrochemical stability indicates the suitability of the first HSBC for use in cathode environments employing high-voltage nonaqueous electrolytes.

In embodiments, the first HSBC is modified by graft-reacting with maleic anhydride, an unsaturated monomer containing an anhydride functional group. The maleic anhydride is chemically grafted onto the first HSBC, including the styrene block, the ethylene-butylene block, or the ethylene-propylene block, to form maleated (first) HSBCs. Suitable maleic anhydride-modified HSBCs and grafting techniques are disclosed in U.S. Pat. Nos. 4,946,899, 7,169,848, 4,578,429, 5,506,299, and 4,292,414, each of which is incorporated herein by reference. In embodiments, the first HSBC contains 0.02-20 wt. %, or 0.1-10 wt. %, or 0.2-5 wt. %, 0.5-3 wt.%, or > 0.5 wt.%, < 5 wt.%, or < 10 wt.%, or < 15 wt.%, or < 20 wt.% of a maleic anhydride functional group as grafted portion(s), based on the total weight of the first HSBC.

Second Hydrogenated Styrenic Block Copolymer: In embodiments, the second HSBC comprises a block copolymer having a structure A-D, wherein A is a vinyl aromatic block and D is composed of at least one conjugated diene, including but not limited to butadiene and isoprene, and does not include vinyl aromatic units in the D block.

In embodiments, the D block is composed of isoprene. Upon hydrogenation, the isoprene-derived block forms a saturated rubber block comprising ethylene-propylene units. The composition of the ethylene-propylene block reflects the microstructure of the isoprene units prior to hydrogenation, including incorporation via 1,4-addition and, optionally, 3,4-addition.

In embodiments, the D block is composed of butadiene. Upon hydrogenation, the butadiene-derived block forms a saturated rubber block comprising ethylene ("E") and butylene ("B") units. The composition of the ethylene-butylene block reflects the microstructure of the butadiene units prior to hydrogenation, including incorporation via 1,2-addition and 1,4-addition. Hydrogenation of 1,2-addition units results in butylene units, while hydrogenation of 1,4-addition units results in ethylene units. The relative proportion of ethylene and butylene units may be controlled by polymerization conditions and is reflected in the butylene unit content of the polymer.

In embodiments, the second HSBC has a structure selected from: S-E/B, S-EP, and mixtures thereof. The second HSBC can be partially or fully hydrogenated.

Each S block is composed of vinyl aromatic units. E/B is composed of ethylene ("E") units / butylene ("B") units. Each EP is composed of ethylene-propylene ("EP") units.

In embodiments, the vinyl aromatic monomer is selected from the group consisting of styrene, alpha-methylstyrene, para-methylstyrene, para-ethylstyrene, para-n-propylstyrene, para-iso-propylstyrene, para-n-butylstyrene, para-sec-butylstyrene, para-isobutylstyrene, para-t-butylstyrene, isomers of para-decylstyrene, isomers of para-dodecylstyrene, ortho-substituted styrene, meta-substituted styrene, 1,1-diphenylethylene, dimethyl styrene, halogenated styrene, methoxy styrene, acetoxy styrene, vinyl toluene, isomers of vinyl toluene, vinyl xylene, 4-vinylbiphenyl, vinyl naphthalene, vinyl anthracene, and mixtures thereof. In embodiments, the vinyl aromatic monomer is styrene.

In embodiments, the second HSBC has a peak molecular weight (Mₚ) of 100-250 kg/mol, or 110-250 kg/mol, or 120-240 kg/mol.

In embodiments, the second HSBC has a butylene unit content of > 20 wt.%, or > 25 wt.%, or > 30 wt.%, or > 35 wt.%, or < 80 wt.%, or 20-80 wt.%, or 25-80 wt.%, or 30-80 wt.%.

In embodiments, the second HSBC has a polystyrene content of 30-60 wt.%, or 30-55 wt.%, or 35-50 wt.%, or 36-48 wt.%.

Polyvinylidene fluoride ("PVDF"): The binder comprises PVDF, a semicrystalline fluoropolymer providing chemical stability, film-forming ability, and mechanical integrity to the cathode layer.

In embodiments, PVDF comprises units derived from vinylidene fluoride and one or more additional monomers, such as (i) a (meth)acrylic acid and/or (ii) a hydroxyalkyl (meth)acrylate. Examples of (meth)acrylic acids include acrylic acid, methacrylic acid, or mixtures of both. The hydroxyalkyl (meth)acrylate may have a C₁ to C₅ alkyl chain, such as hydroxyethyl (meth)acrylate, 2-hydroxypropyl (meth)acrylate, or 2-hydroxybutyl (meth)acrylate.

In embodiments, PVDF has a weight average molecular weight ranging from 50,000 to 8,000,000 g/mol. In some cases, the molecular weight may range from 50,000 to 6,500,000 g/mol, or 50,000 to 5,000,000 g/mol, or 50,000 to 3,000,000 g/mol, or 50,000 to 1,500,000 g/mol, or 500,000 to 1,500,000 g/mol.

In embodiments, PVDF includes modified PVDF materials. These modified PVDF binders may comprise copolymers of vinylidene fluoride with one or more comonomers, including hexafluoropropylene (HFP), chlorotrifluoroethylene (CTFE), (meth)acrylic acid monomers such as acrylic acid or methacrylic acid, or hydroxyalkyl (meth)acrylates having C₁ to C₅ hydroxyalkyl groups.

Active Material: Cathode active materials suitable for use in cathode layers and cathode slurry compositions include insertion-type or intercalation-type active materials capable of reversible electrochemical reaction with alkali ions.

In embodiments, such cathode active materials include lithium-containing transition metal oxides, phosphates, or mixed metal compounds. Examples include lithium cobalt oxide (LiCoO₂, LCO), lithium nickel manganese cobalt oxide (LiNiₓMn_{γ}CozO₂, NMC), lithium nickel cobalt aluminum oxide (LiNiₓCo_{γ}AlzO₂, NCA), lithium manganese oxide (LiMn₂O₄, LMO), lithium iron phosphate (LiFePO₄, LFP), lithium-rich layered oxides, lithium titanium oxide (Li₄Ti₅O₁₂), lithium vanadium phosphate (Li₃V₂(PO₄)₃), and other lithium-containing transition metal oxides or mixed metal oxides.

In further embodiments, the cathode active material comprises sodium-containing transition metal oxides, phosphates, Prussian blue analogues, or mixed metal compounds suitable for sodium-ion batteries.

In embodiments, the active material is present in the cathode slurry composition in amounts of 80-98 wt.%, or at least 85 wt.%, or at least 90 wt.%, based on the total weight of the cathode slurry composition.

Conductive Material: Conductive materials suitable for use in cathode layers of rechargeable batteries include any electrically conductive material unless it causes a chemical change. Examples of the conductive material include one or more of a carbon-based material, such as natural graphite, artificial graphite, carbon black, acetylene black, ketjen black, carbon fiber, a metal powder; or a metal-based material, such as a metal fiber including copper, nickel, aluminum, silver, or mixtures thereof.

In embodiments, the conductive material is present in the cathode slurry composition in amounts of 1-10 wt.%, or 1-5 wt.%, or at least 2 wt.%, or at least 3 wt.%, or < 10 wt.%, based on the total weight of the cathode slurry composition.

Solvent: The cathode slurry comprises a solvent for dissolving or dispersing the binder during electrode fabrication. Examples include nitrogen-containing organic solvents such as N-Methyl-2-pyrrolidone, N-Ethyl-2-pyrrolidone, dimethyl sulfoxide, dimethylformamide, dimethylpropyleneurea, gamma-butyrolactone, and dimethylacetamide; and also low-boiling point, common organic solvents including ketone solvents such as acetone, methyl ethyl ketone, cyclohexanone, and methyl isobutyl ketone; ester solvents such as ethyl acetate and butyl acetate; ether solvents such as tetrahydrofuran and dioxanes; and mixtures of the above.

Process for Making Cathode Slurry and Cathode Layer: A cathode slurry is prepared by dissolving a binder composition comprising PVDF and a HSBC component in a solvent, followed by mixing and dispersing an active material and a conductive material in the binder solution. Alternatively, the slurry can be prepared by combining the binder composition, active material, and conductive material in solid form, followed by addition of solvent and mixing to form a dispersion.

In embodiments, the PVDF and HSBC components can be dissolved together or separately into the solvent at ambient or elevated temperature sufficient to dissolve the components. In embodiments, the HSBC component is dissolved at 70-100°C, or 75-95°C, or 80-90°C. In embodiments, the concentration of polymer solids (PVDF and HSBC component) in the binder solution is 5-15 wt.%, or 5-10 wt.%, or 8-10 wt.%, based on the total weight of the binder solution.

The active material and conductive material are combined with the binder components in solution and mixed to form a cathode slurry. The order of addition can be varied, and mixing can be performed using any suitable technique, including batch or continuous processes, to obtain a homogeneous dispersion.

In embodiments, the cathode slurry comprises active material : conductive material : PVDF : HSBC component at a mass ratio of 72 : 4.0 : 3.6 : 0.4 to 108 : 6.0 : 5.4 : 0.6, or 76.5 : 4.25 : 3.825 : 0.425 to 103.5 : 5.75 : 5.175 : 0.575, or 81 : 4.5 : 4.05 : 0.45 to 99 : 5.5 : 4.95 : 0.55, or 85.5 : 4.75 : 4.275 : 0.475 to 94.5 : 5.25 : 4.725 : 0.525.

Additional solvent can be added during mixing to facilitate dispersion and adjust slurry viscosity for coating.

In embodiments, the cathode slurry has a solids content of at least 30 wt.%, > 35 wt.%, or > 40 wt.%, or < 90 wt.%, or < 80 wt.%, or < 75 wt.%, or < 70 wt.%, or 30-75 wt.%, or 30-65 wt.%, or 40-75 wt.%, or 40-60 wt.%, based on the total weight of the slurry.

In embodiments, the cathode layer is prepared by applying the cathode slurry to a current collector. Suitable current collectors include electrically conductive metal substrates, such as aluminum, in the form of a foil, mesh, or patterned sheet. In embodiments, the current collector has a thickness of 5-30 µm and is optionally treated, roughened, or coated to improve adhesion.

The cathode slurry can be applied to one or both sides of the current collector using a coating technique selected from doctor blade coating, slot-die coating, transfer coating, spray coating, roll coating, dip coating, and curtain coating. The coated film may have a thickness of 10-300 µm, or 20-200 µm, or 50-120 µm.

After coating, the film is dried to remove solvent and form a cathode layer.

The dried cathode layer can be compressed to increase density. In embodiments, the cathode layer has a compaction density of 1.6-2.0 g/cm³.

Binder Properties: The binder composition can be evaluated independently of the cathode by forming films and measuring physical and electrochemical properties relevant to electrolyte interaction and stability.

In embodiments, a film formed from the binder composition exhibits an electrolyte uptake of 5-20 wt.%, or 6-15 wt.%, or 7-15 wt.%, after immersion in electrolyte for 24 hours at room temperature.

Slurry Properties: In embodiments, the cathode slurry comprising PVDF and the HSBC component exhibits shear-thinning behavior and improved rheological properties relative to slurries comprising PVDF alone, facilitating dispersion of solid components, slurry stability, and coating uniformity.

In embodiments, the cathode slurry composition has a viscosity in a range of 2,000-15,000 cP, or 2,000 cP-11,000 cP, or 2,000-10,000 cP, or 3,000-10,000 cP, or 3,000-9,500 cP, or 4,000-9,500 cP, at a shear rate of 40/s and at ambient, e.g., 21-25°C, according to ASTM D2196.

In embodiments, the cathode slurry composition with a solids content of 45 wt.%, has a viscosity in a range of 2,000-6,000 cP, or 3,000-6,000 cP, or 4,000-5,500 cP, at a shear rate of 40/s and at ambient, e.g., 21-25°C, according to ASTM D2196.

In embodiments, the cathode slurry composition with a solids content of 47.4 wt.%, has a viscosity in a range of 7,000-11,000 cP, or 7,000-10,000 cP, or 8,000-10,000 cP, or 8,500-9,500 cP, at a shear rate of 40/s and at ambient, e.g., 21-25°C, according to ASTM D2196.

In embodiments, the cathode slurry composition has a fineness of grind that is no greater than 20 µm, or no greater than 15 µm, or no greater than 10 µm, or no greater than 8 µm, or no greater than 5 µm, or 1-15 µm, or 1-10 µm, or 1-5 µm. Typically measured using a "Hegman" or "grind" gauge, the fineness of grind can provide information about the actual size of the individual dispersed solid particles, the degree to which particles are dispersed and/or the presence of agglomerates or coarse particles. Fineness of grind values can be expressed as µm (0.001 inch) or according to the Hegman scale or National Standard (NS) scale (ranging from 0 to 8, with numbers increasing as the particle size decreases. An applicable technique for measuring fineness of grind is presented in ASTM D1210-05(2014), with the title Standard Test Method for Fineness of Dispersion of Pigment-Vehicle Systems by Hegman-Type Gage.

Cathode Layer Properties: Cathode layers formed from the slurry compositions can exhibit improved interfacial adhesion, cohesive strength, and dimensional stability during electrode processing and battery operation.

In embodiments, the cathode layer exhibits a peel adhesion strength between the cathode layer and the current collector of at least 0.5 N/25 mm, or > 0.55 N/25 mm, or > 0.6 N/25 mm, or 0.5-1.1 N/25 mm, or 0.5-1.0 N/25 mm, or 0.5-0.9 N/25 mm, 0.55-1.1 N/25 mm, or 0.55-1.0 N/25 mm, or 0.55-0.9 N/25 mm, measured according to ASTM D903, wherein the peel test is performed at a peel rate of 200 mm/min.

In embodiments, the cathode layer exhibits a peel adhesion strength between the cathode layer and the current collector that is at least 5% higher, at least 10% higher, or at least 15% higher than that of a cathode layer formed without the HSBC component, measured according to ASTM D903, wherein the peel test is performed at a peel rate of 200 mm/min.

In embodiments, the cathode layer exhibits an electrolyte uptake of 6-20 wt.%, or 7-15 wt.%, or 8-13 wt.%, after immersion in electrolyte for 24 hours at room temperature, based on the dry weight of the binder present in the cathode layer. This behavior reflects the combined contribution of PVDF, which limits dimensional change, and the HSBC component, which provides elastic compliance, resulting in a cathode layer that accommodates electrolyte exposure while maintaining interfacial integrity, mechanical cohesion, and resistance to delamination.

The electrolyte uptake described herein is a property of the cathode layer and reflects interactions between the binder composition and the electrolyte within the cathode layer.

Cathode Properties: The cathode can exhibit improved resistance to delamination, cracking, and mechanical failure during electrode handling, winding, and battery operation.

In embodiments, the cathode exhibits improved mechanical durability as evaluated by a winding test, wherein the cathode is wound around a mandrel and visually inspected for defects. In embodiments, following the winding test, > 50%, or > 60%, or > 70%, or > 80% of cathode specimens are free of visual defects. In some embodiments, from 50-100%, 70-100%, or 90-100% of the specimens exhibit no visible cracking, peeling, or delamination after the winding test.

Battery Performance: Batteries comprising the cathodes described herein can exhibit improved electrochemical performance, including capacity retention and efficiency during cycling.

In embodiments, a battery comprising the cathode as described herein exhibits a discharging capacity retention after 200 cycles in a range of 60-90%, or 60-85%, or 60-80%, or 70-85%, or 75-85%, as measured using a coin cell assembled with the cathode and tested on a LanHe CT3002A battery test system.

In embodiments, a battery comprising the cathode as described herein has a first Coulombic efficiency of > 70%, or > 80%, or > 90%, or > 95%, or 70-100%, or 80-99%, or 90-99%, or 95-99%, as measured using a coin cell assembled with the cathode and tested on a LanHe CT3002A battery test system.

Analytical Methods: The composition, structure, and properties of the cathode, cathode slurry composition, and binder components described herein may be characterized using the following analytical techniques.

In embodiments, a cathode layer is analyzed as prepared. In some embodiments, a cathode layer may be obtained from a battery or electrode structure and subjected to analysis directly or after appropriate sample preparation, including removal of electrolyte or separation of components, as needed to facilitate measurement. Measurements performed on cathode layers recovered from electrochemical cells may be influenced by electrochemical processes and sample handling, and such analyses are interpreted in view of these factors. Such procedures enable analysis of the cathode layer, the binder composition present therein, and the adhesion and compositional characteristics of the cathode.

The presence of PVDF in the binder composition can be determined by Fourier transform infrared spectroscopy (FTIR), based on characteristic absorption bands associated with C-F bonds. The presence of a HSBC component can be identified by NMR spectroscopy, optionally in combination with FTIR, including detection of vinyl aromatic units and hydrogenated diene-derived segments. In embodiments, these techniques are applied to cathode layers or to polymer fractions obtained therefrom.

Structural features of HSBC, including the presence of vinyl aromatic blocks and hydrogenated diene-derived blocks, can be characterized by proton nuclear magnetic resonance (¹H NMR) spectroscopy. The polystyrene content of HSBC can be determined by ¹H NMR spectroscopy based on integration of signals corresponding to aromatic and aliphatic protons. In embodiments, characterization of polymer structure and composition is performed on cathode layers as prepared or on polymer samples prior to incorporation into a cathode.

The ABI of the HSBC can be determined by HSQC NMR, wherein the cross-peaks corresponding to vinyl aromatic units in different sequence environments are identified and integrated. Within the M block of the polymer, HSQC chemical shift correlations are used to distinguish vinyl aromatic units in different sequence environments, including units flanked by vinyl aromatic units on both sides along the polymer chain. The ABI is determined from the relative proportion of such units to the total vinyl aromatic units present in the M block.

Molecular weight parameters, including peak molecular weight (Mp), can be determined by size exclusion chromatography (SEC) using appropriate calibration standards, such as polystyrene standards. Such measurements can be performed on polymer samples or on polymer fractions obtained from cathode layers.

The relative proportions of PVDF and the HSBC component in the binder composition can be determined or estimated using one or more of thermogravimetric analysis (TGA), differential scanning calorimetry (DSC), elemental analysis, or spectroscopic calibration methods.

The viscosity of the cathode slurry composition is measured using a rotational viscometer according to ASTM D2196 at a shear rate of 40 s⁻¹ and a temperature of 21-25°C. The selected shear rate is representative of shear conditions encountered during coating processes for electrode fabrication. Solids content can be determined based on the mass of nonvolatile components relative to the total mass of the slurry.

Electrolyte uptake can be determined by measuring the weight increase of a binder-containing film or cathode layer after immersion in a liquid electrolyte for a specified period. In one method, a sample is weighed prior to immersion, immersed in electrolyte at room temperature for 24 hours, removed, surface electrolyte is removed, and the sample is reweighed. Electrolyte uptake is calculated as the percentage increase in weight relative to the initial dry weight of the binder present in the sample.

Peel adhesion strength between a cathode layer and a current collector is measured according to ASTM D903 using a tensile tester. A coated electrode sample is adhered to a test panel and peeled at a controlled rate, and the force required to separate the cathode layer from the current collector is recorded. The peel adhesion strength is reported as force per unit width (N/25 mm). In embodiments, the sample has dimensions of about 25 mm × 150 mm, and the test is conducted at a peel rate of 200 mm/min.

Examples: The following examples are intended to be non-limiting.

The following test methods are used.

PVDF is a polyvinylidene fluoride homopolymer having a molecular weight of 1,000,000 g/mol with a melting temperature of 165°C.

HSBC is a hydrogenated styrenic block copolymer having a (S-EB/S-S)₂X structure, a peak molecular weight (Mp) of 125 kg/mol, a total polystyrene content (PSC) of 35 wt.%, a butylene unit content of 71 wt.%, a coupling efficiency of 93%, a diblock content of less than 7 wt.%, a residual unsaturation (RU) of 0.1 meq/g, and a polystyrene block Mp of 7.2 kg/mol. The M block comprises an E/B/S copolymer block exhibiting a ABI of about 30%.

NMP (solvent) is electronic grade 1-Methyl-2-pyrrolidinone having a purity of at least 99.9%, with water content ranging from 0-0.03% as measured by Karl Fishers titration.

Active Material is a lithium iron phosphate (LiFePO₄) powder with a median particle diameter (D50) of 1.302 µm, a tap density of 0.72 g/cm³, and a carbon content of 1.48%.

Conductive Material is high purity and structured carbon black powder with a BET surface area of 62m²/g.

Preparation of PVDF binder solution and cathode slurry: A PDVF binder solution was prepared by dissolving PVDF in NMP at room temperature. The solid content of the PVDF binder solution was controlled at 8-10 wt.%. A cathode slurry was then prepared by dispersing active material and conductive agent into the PVDF binder solution using a planetary centrifugal mixer until a homogeneous mixture was obtained. The slurry formulation included active material, conductive agent, and binder solution at a mass ratio of 90:5:5.

Preparation of PVDF+HSBC binder solution and cathode slurry: A PVDF binder solution was prepared by dissolving PVDF in NMP at room temperature. A separate HSBC binder solution was prepared by dissolving the HSBC in NMP at 80-90 °C for 2 hours. The solid content of each binder solution was controlled at 8-10 wt.%.

A cathode slurry was prepared by dispersing active material and conductive agent into the PVDF binder solution using a planetary centrifugal mixer until a homogeneous mixture was obtained. The HSBC binder solution was then added to the mixture at a PVDF to HSBC weight ratio of 9:1, and mixing was continued until a uniform slurry was obtained. The slurry formulation included active material, conductive agent, PVDF, and HSBC at a mass ratio of 90:5:4.5:0.5.

Additional NMP solvent can be added during slurry preparation to facilitate dispersion of the active material and conductive agent, and to adjust slurry viscosity for coating (e.g., 2,000-15,000 cP). The viscosity of the samples at various shear rates is shown in Table 1. Viscosity was measured using a HB-DV-II Brookfield viscometer at various shear rates at room temperature (as in Table 1 below). The final solids content of the slurry ranged from 45-50 wt.%, as determined in accordance with ASTM D2196.

**Table 1: Slurry Viscosity**

| Shear rate, 1/s | 45 wt.% solids content in PVDF based slurry (cP) | 45 wt.% solids content in PVDF+HSBC based slurry (cP) | 47.4 wt.% solids content in PVDF+HSBC based slurry (cP) |
|---|---|---|---|
| 2 | 24607 | 15875 | 34132 |
| 10 | 12859 | 8414 | 15716 |
| 20 | 9446 | 6271 | 11510 |
| 40 | 7223 | 4921 | 8930 |
| 100 | 5318 | 3874 | 6620 |
| 200 | 4096 | 3191 | 4953 |
| 400 | 2965 | 2473 | 3655 |

The slurry fineness was evaluated using a fineness gauge. The measurement is based on observing the point along the scale where the slurry no longer forms a continuous film or where the individual particles are clearly distinguishable. This point indicates the fineness of the slurry. The slurry using PVDF alone in a ratio of active material:conductive material:PVDF 90:5:5, and the slurry using PVDF and HSBC in a mass ratio of active material:conductive material:PVDF:HSBC in a mass ratio of 90:5:4.5:0.5, both had a fineness of about 5 µm.

### Preparation of Electrode Films

The cathode slurry was coated on aluminum foil using a coating bar at a speed of 100 mm/min to form the cathode layer. The wet coated film was dried in a vacuum oven to remove NMP solvent. The resulting dry film was calendared (compressed) to a target film thickness of around 60 -120 µm. The target compaction density was in the range of 1.6 to 2.0 g/cm³.

Peel Strength Measurement: The cathode layer on aluminum foil was cut into strip samples with a dimension of 150 mm × 25 mm in the coating direction. The coated surface of each sample was fixed to stainless-steel peel test panel using double-sided adhesive tape (e.g, 3M). Care was taken to avoid air bubbles and ensure uniform adhesion between the sample and the test panel.

Peel strength testing was conducted using a tensile tester at a peel rate of 200 mm/min, and the peel force was recorded. The test method is based on the principles of ASTM D903, with modifications to sample dimensions and peel rate, as appropriate for electrode materials.

The cathode layers were prepared from cathode slurries having a solids content of 45 wt.% for the PVDF-based formulation and 47.4 wt.% for the PVDF+HSBC-based formulation, as described above.

**Table 2: Peel Strength**

| Sample | Peel Strength (N/25mm) |
|---|---|
| PVDF based electrode | 0.5 |
| PVDF+HSBC based electrode | 0.6 |

Electrolyte Uptake (Weight Increase) of Binder Films: HSBC and PVDF were separately evaluated for electrolyte uptake by measuring weight increase after soaking. Polymer films were prepared by heat pressing at 180 °C for 5 minutes. The resulting polymer sheets were cut into samples of 25 x 25 mm, with the HSBC sheets having a thickness of 1.70-1.80 mm and the PVDF sheets having a thickness of 0.60-0.65 mm. Three samples were prepared for each polymer.

The samples were weighed and then immersed in electrolyte (1.0 M LiPF₆ dissolved in ethylene carbonate (EC), diethyl carbonate (DEC), and dimethyl carbonate (DMC) in a 1:1:1 volume ratio) at room temperature for 24 hours and 48 hours. After soaking, the samples were removed, surface electrolyte was removed, and the samples were reweighed. The weight increase of each sample was calculated and averaged over three samples.

After soaking for 24 hours, the HSBC samples exhibited an average weight increase of 11 wt.%, while the PVDF samples exhibited an average weight increase of 5 wt.%. After soaking for 48 hours, the HSBC samples exhibited an average weight increase of 14 wt.%, while the PVDF samples exhibited an average weight increase of 12 wt.%.

Volumetric swelling of the polymer sheets was not directly measured due to deformation of the samples after electrolyte exposure, which rendered dimensional measurements unreliable. Instead, electrolyte uptake was evaluated based on weight increase. The measured weight increase reflects electrolyte interaction with the polymer and provides an indication of associated dimensional change and solvent compatibility.

### Battery Assembly and Application Performance Testing

CR2032-type coin cells were assembled for electrochemical properties testing. The cathode electrode samples were cut into discs having a diameter of 14 mm and then baked at 60°C for 12hrs before assembly. The cathode discs were used as the working electrode, and lithium metal was used as the counter and reference electrode. Celgard 2500 (porous polypropylene film) was used as the separator. The PVDF based cathode electrodes had an areal loading of approximately 8.5-9.0 mg/cm², and the HSBC based cathode electrodes had an areal loading of 9.2-10.0 mg/cm².

The electrolyte was 1.0 M LiPF₆ (lithium hexafluorophosphate) dissolved in ethylene carbonate (EC) and diethyl carbonate (DEC) (1:1 by volume), or in EC/DEC/dimethyl carbonate (DMC) (1:1:1 by volume), depending on the test conditions. Approximately 90 µL of electrolyte was added to each coin cell.

All coin cells were assembled in argon-filled glove box with water and oxygen levels of less than 0.1 ppm. After assembly, the cells were conditioned at room temperature (18-25°C) for 12 hrs prior to electrochemical testing. The cells were then evaluated for cycling performance and rate capability between 2.5 V and 3.65 V under defined current conditions.

Cycle performance testing was conducted on a LanHe CT3002A battery test system. The coin cells rested at room temperature for 10 minutes prior to testing. The cells were cycled between 2.5 V and 3.65 V.

Each cycle included charging at 1/3C constant current to 3.65 V, followed by constant voltage to a cut-off current of 0.02C, and discharging at 1/3C to 2.5 V.

The initial charging capacity and initial discharging capacity were recorded. Capacity retention was calculated as the ratio of discharge capacity after a given number of cycles to the initial discharge capacity. First Coulombic efficiency was calculated as the ratio of the initial discharge capacity to the initial charge capacity.

The C-rate is calculated based on the measured initial discharge capacity of the cell.

The cathode layer used in the coin cells were prepared from slurries having 45 and 47.4 wt.% solids content, as described above.

**Table 3 - Cycle performance**

| | discharging capacity after 1st cycle, mAh/g | discharging capacity retention after 200 cycles, % | First Coulomb efficiency, % |
|---|---|---|---|
| PVDF based electrode | 153.2 | 81.4 | 97.9 |
| PVDF+HSBC based electrode | 152.1 | 78.9 | 98.2 |

**Table 4 - C rates performance**

| | Discharging Capacity, mAh/g | |
|---|---|---|
| C-rate | PVDF based electrode | PVDF+HSBC electrode |
| 0.1C | 157.9 | 157.7 |
| 1/3C | 154.1 | 153.4 |
| 0.5C | 151.8 | 151.1 |
| 1C | 143.9 | 143.5 |
| 2C | 128.5 | 129.3 |
| 3C | 108.2 | 111.3 |

As shown in Tables 2-4, incorporation of the HSBC improves peel adhesion to the current collector and enhances slurry processability, while maintaining comparable electrochemical performance, including capacity and rate capability. In embodiments, the incorporation of the HSBC improves adhesion and rheology without negatively impacting electrochemical performance.

**Table 5 -Summary of discharging medium voltage of coin cells at various CRates**

| C-rate | Sample | Discharging medium voltage (V) |
|---|---|---|
| 0.1 C | PVDF based electrode | 3.38 |
| | PVDF+HSBC based electrode | 3.38 |
| 1/3 C | PVDF based electrode | 3.32 |
| | PVDF+HSBC based electrode | 3.32 |
| 0.5 C | PVDF based electrode | 3.28 |
| | PVDF+HSBC based electrode | 3.29 |
| 1C | PVDF based electrode | 3.15 |
| | PVDF+HSBC based electrode | 3.17 |
| 2 C | PVDF based electrode | 2.93 |
| | PVDF+HSBC based electrode | 2.97 |
| 3 C | PVDF based electrode | 2.74 |
| | PVDF+HSBC based electrode | 2.78 |

Winding test - The cathode electrode was wound around a mandrel (with a diameter of 0.7 mm) five times and visually inspected for cracks, peel off and other defects. Ten specimens were tested and the number of specimens without visual defects were recorded. The percentage of tests without visual defects are in Table 6 below. The indicated thickness after rolling is the final dry film thickness after rolling-by-rolling machine.

**Table 6: Winding Test - % of specimens without visual defects**

| | thickness after rolling | |
|---|---|---|
| Sample | 92-95µm | 105-110µm |
| PVDF based electrode | 50% | 50% |
| PVDF+HSBC based electrode | 100% | 90% |

## Claims

1. A cathode for a battery, comprising:
a current collector; and
a cathode layer disposed on the current collector, wherein the cathode layer comprises:
an active material;
a conductive material; and
a binder composition comprising:
polyvinylidene fluoride;
a hydrogenated styrenic block copolymer component comprising a first hydrogenated styrenic block copolymer having at least one formula selected from: A-M-A, (A-M-A)ₙX, (A-M)ₙX, and mixtures thereof,
wherein:
n is an integer of 2 to 7;
X is residue of a coupling agent;
each A block is composed of vinyl aromatic units;
each M block is composed of at least one conjugated diene unit and at least one vinyl aromatic unit, the M block having an Aromatic Blockiness Index of 3-40%, as determined by HSQC NMR spectroscopy;
wherein the first hydrogenated styrenic block copolymer has:
a peak molecular weight (Mp) of 80-150 kg/mol; and
a polystyrene content of 20-70 wt.%;
wherein the polyvinylidene fluoride to hydrogenated styrenic block copolymer component is present at a weight ratio of 4:6 to 15: 1;
wherein the cathode layer exhibits a peel adhesion strength to the current collector of greater than 0.5 N per 25 mm, measured according to ASTM D903, wherein the peel test is performed at a peel rate of 200 mm/min.

2. The cathode of claim 1, wherein the M block is selected from E/B/S and EP/S, wherein:
each E/B/S block is a copolymer block composed of ethylene units, butylene units, and vinyl aromatic units; and
each EP/S block is a copolymer block composed of ethylene-propylene units and vinyl aromatic units.

3. The cathode of any of claims 1-2, wherein the first hydrogenated styrenic block copolymer has at least one formula selected from: S-E/B/S-S, (S-E/B/S-S)ₙX, (S-E/B/S)ₙX, S-EP/S-S, (S-EP/S-S)ₙX and (S-EP/S)ₙX, and mixtures thereof,
wherein:
n is an integer of 2 to 7;
X is residue of a coupling agent;
each S block is composed of vinyl aromatic units;
each E/B/S block is a copolymer block composed of ethylene units, butylene units, and vinyl aromatic units; and
each EP/S block is a copolymer block composed of ethylene-propylene units, and vinyl aromatic units.

4. The cathode of claim 3, wherein the first hydrogenated styrenic block copolymer has the formula (S-E/B/S-S)ₙX and a peak molecular weight of 90-140 kg/mol.

5. The cathode of any of claims 1-4, wherein the first hydrogenated styrenic block copolymer has a polystyrene content of 30-45 wt.%.

6. The cathode of any of claims 1-5, wherein the first hydrogenated styrenic block copolymer is modified by graft-reacting with maleic anhydride.

7. The cathode of any of claims 1-6, wherein the first hydrogenated styrenic block copolymer has a butylene unit content of 20-80 wt.% relative to total diene-derived units.

8. The cathode of any of claims 1-7, wherein the hydrogenated styrenic block copolymer component further comprises a second hydrogenated styrenic block copolymer having a formula A-D, wherein:
each A block is composed of vinyl aromatic units;
each D block is composed of a conjugated diene unit; and
wherein the weight ratio of first hydrogenated styrenic block copolymer to second hydrogenated styrenic block copolymer is 1:1 to 3:1.

9. The cathode of claim 8, wherein the second hydrogenated styrenic block copolymer component has a structure selected from S-E/B, S-EP, and mixtures thereof, wherein:
each S block is composed of vinyl aromatic units;
each E/B block is a copolymer block composed of ethylene units / butylene units; and
each EP block is a copolymer block composed of ethylene-propylene units.

10. The cathode of any of claims 1-9, wherein the cathode layer has a mass ratio of active material : conductive material : polyvinylidene fluoride : hydrogenated styrenic block copolymer component of 72 : 4.0 : 3.6 : 0.4 to 108 : 6.0 : 5.4 : 0.6.

11. The cathode of any of claims 1-10, wherein the cathode layer exhibits an electrolyte uptake of 7-15 wt.%, based on the dry weight of the binder present in the cathode layer, after immersion in a liquid electrolyte for 24 hours at room temperature.

12. The cathode of any of claims 1-11, wherein the peel adhesion strength between the current collector and the cathode layer, measured according to ASTM D903, is at least 5% higher than that of a cathode layer without the hydrogenated styrenic block copolymer component.

13. The cathode of any of claims 1-12, wherein the current collector is treated, roughened, or coated with carbon or oxide layers.

14. The cathode of any of claims 1-13, wherein the binder composition is dissolved or dispersed in a solvent selected from the group consisting of N-Methyl-2-pyrrolidone, N-Ethyl-2-pyrrolidone, dimethyl sulfoxide, dimethylformamide, dimethylpropyleneurea, gamma-butyrolactone, dimethylacetamide, acetone, methyl ethyl ketone, cyclohexanone, methyl isobutyl ketone, ethyl acetate, butyl acetate, tetrahydrofuran, dioxanes, and mixtures thereof, forming a slurry.

15. The cathode of claim 14, wherein the slurry has at least one of:
a viscosity of 2,000-15,000 cP, measured at 21-25°C and a shear rate of 40/s, according to ASTM D2196;
a solids content of 40-75 wt.%; and
a fineness of grind of no greater than 10 µm.
